# EUROPEAN PATENT SPECIFICATION

(11) **EP 3 034 953 B1**
(45) Date of publication and mention of the grant of the patent: **05.09.2018**
(21) Application number: 14197960.9
(22) Date of filing: 15.12.2014
(51) Int. Cl.: F24D 12/02, F28D 20/00

(54) **System for transport, storage and use of thermal and thermo-chemical energy potentials**
System zum Transportieren, Lagern und Verwenden von Potenzialen thermischer und thermochemischer Energie
Système pour le transport, le stockage et l'utilisation de potentiels d'énergie thermique et thermochimique

(43) Date of publication of application: 22.06.2016
(73) Proprietor: Technische Universität Berlin, 10623 Berlin (DE)
(72) Inventor: Buchholz, Martin, 10435 Berlin (DE); Buchholz, Reiner, 10961 Berlin (DE)
(74) Representative: Schulz Junghans Patentanwälte PartGmbB

(56) References cited:
- WO-A1-2010/145040
- GB-A- 1 152 440
- US-A- 4 324 052
- US-A- 4 723 417

## Description

Increasing prices for energy are demanding for the exploitation of previously unused sources of waste heat, especially at the level of low temperatures. On one side, heating systems working with low supply temperatures are more and more available. On the other hand, the problems associated to transport of low tempered heat persists. Heat losses during transport are forcing to reduce the use of low tempered heat to near distance heat networks with a radius of only a few hundred meters, thus reducing the use of low tempered heat to specific cases, where a heat source and related heat users are close together, while in most cases, heat remains unused.

Potentials of unused heat can be qualified by the use of desiccant networks. Within this technological approach, heat is used for desiccant regeneration, a process in that water is evaporated out of the desiccant, providing a desiccant concentrate. This concentrate can be used as an energy carrier for transport and storage. Due to the thermo-chemical nature of energy conversion, there is no thermal energy loss after the concentration process and the desiccant can be used at other locations for example in processes of industrial drying, latent heat recovery in buildings etc. Due to its high thermal density, transport of desiccants can still be economic at distances around 50 km, potentially allowing the exploration of remote heat sources, like waste heat from power stations.

Patent JP2006064325 describes the use of vans for desiccant transport in a desiccant network, with a heat source, a desiccant desorber (including the possibility of using the waste heat from the van itself for desiccant regeneration) and a desiccant based humidity absorber, using the desiccant as energy source.

Limiting factors of a state of art desiccant network are investment costs for the desorbers and storage containers on one side, but especially running costs for the needed heat in the regeneration process and for desiccant transport. Establishment of desiccant networks at large scale are especially hindered by the required volume flow, that would allow transport in pipelines with sufficient cross section and by this sufficient cheap transport through longer distances. Therefore, a well-developed market for desiccant systems with sufficient high quantitative demand on the user side would be required. Until now, neither transport facilities nor desiccant users are existing at larger scale. To create such a market, a desiccant network would need to grow up from smaller profitable units, in order to develop networks, that can grow together to a larger unit.

Document US 4,723,417 describes a system for dehumidifying air where the heat of sorption is transferred from the dehumidifiers to the regenerators moving moisture laden desiccant from the dehumidifiers to its regenerator. Absorbed moisture is then rejected from the regenerators. The system also includes other heat sources contributing for raising the temperature required for regeneration.

Unused heat sources and a demand for reducing energy costs in drying applications are preexisting, while operating a desiccant network is still uneconomic, as
- either the capacity of heat sources is insufficient for the needed amount of desiccant, that would be required by an existing, potential user in sufficient proximity of the heat source, or
- a large heat source exists, but not enough desiccant users are placed in sufficient proximity, to reach a level of profitable desiccant transport capacities, or
- the demand for desiccants and the supply of previously unused and sufficiently cheap heat capacities may change during time. As investments are made in respect of a given situation, there is a lack of security, especially if being dependent on only one external heat source or on only one desiccant user being involved.

These problems are solved by a system consisting of a thermal network jointly connected with a desiccant network. Previously unused heat from the thermal network return of a heat consumer is used to heat up a desiccant within a desiccant desorber via a first heat transfer unit, in order to evaporate parts of the water within the desiccant, to produce and supply a desiccant concentrate to the desiccant network. As the desiccant desorber works under use of an evaporative cooling process like in a cooling tower, the temperature in the thermal network downstream of the first heat transfer unit is reduced, thus allowing to connect further low tempered heat sources, (previously insufficient for network heat supply due to higher network temperatures) feeding heat to the thermal network through a second heat transfer unit, together increasing the number of potential counterparties within the thermal network and increasing the network energy fluxes according to the features of claim 1.

Preferred embodiments are stated in the sub claims and are also explained below.

According to the invention, the system comprises:
- at least one thermal network, consisting of at least one heat source, at least one heat consumer, connected to each other by a circuit, configured to carry a thermo-fluid, and
- at least one desiccant network, consisting of at least one desiccant desorber, at least one desiccant based absorber/adsorber and at least one storage for desiccant concentrate, wherein said components of the desiccant network are interconnected to exchange among each other desiccant concentrate and diluted desiccant under use of pipelines, freight services or alike
- a first heat transfer unit, connected to the thermal network circuit downstream of the first heat consumer, configured to transfer heat from the thermo fluid of the thermal network to the desiccant material and returns thermo-fluid particularly with decreased temperature to the circuit downstream direction of the thermal network . In this way, the desiccant desorber is configured as an additional heat consumer in the thermal network and configured to evaporate parts of its water content to surrounding air and by this provides a desiccant concentrate to the desiccant network,
- a second heat transfer unit, connected to the thermal network downstream of the first heat transfer unit is configured to receive thermo fluid with reduced temperature from the thermal network and transfers heat from a second heat source to the thermo-fluid of the thermal network.

Compared to the state of art of thermal networks, the invention allows to use energy capacities from the return pipe in the downstream direction of the thermal network for desiccant regeneration, that has previously been unused due to its low temperature level but which is sufficient for desiccant regeneration in many cases, especially during the cold season with low absolute humidity in surrounding (cold) air. By taking up heat through the first heat transfer unit and providing desiccant concentrate generated in the desiccant desorber, a loss-free storage and transport of the produced thermo-chemical potential of the desiccant concentrate with similar or even higher energetic density compared to the energetic density in the thermal network allows longer transport distances and storage retention times compared to transport of low tempered heat. The increased energy density and loss free thermo chemical energetic potential of the desiccant allows to store and transport energy potentials within an increased perimeter and to an increased number of energy consumers being served by a combined thermal- and a desiccant network. While low tempered heat is lost after a few hundred meters of transport, the desiccant does not lose its energetic load and is only limited by costs for storage capacities and specific transport costs.

Compared to the state of art of desiccant networks, the invention allows a clear reduction of desiccant transport distances, especially during an initial network set up, because the heat consuming desiccant desorbers can be placed along existing heat networks, that are providing heat in a decentralized way, and by this in a potentially sufficient proximity to desiccant users, making the desiccant network more viable in terms of transport costs..

As a matter of reduced temperatures in the thermal network return direction downstream of the first heat transfer unit, further heat sources at low temperature level, that previously could not be integrated into the thermal network, due to the insufficient temperature difference between heat source and thermo-fluid in the thermal network, can now be integrated via a secondary heat transfer unit.

This is of high importance, as there are numerous kinds of unused heat sources providing low tempered heat in urban and suburban context and especially new energy technologies like e.g. solar thermal applications and aquifer thermal energy storages are much more efficient, if the low tempered part of the thermal load is also used and implemented in a network distribution system. In this way, also expensive decentralised thermal storage capacities can be reduced.

The configuration can be extended to further desiccant desorbers or heat consumers analogue to the configuration of heat transfer unit and to further heat sources analogue to heat transfer unit in parallel configuration (several heat transfer units receives the fluid from the same point of the circuit with similar temperature) and serial configuration (a heat transfer unit is connected to a heat transfer unit which is connected to another heat transfer unit, which is connected to another heat transfer unit etc.).

Further on, the invention includes the option of coupling the thermal network and the desiccant network in a way, that heat in the second heat transfer unit is provided from a desiccant based humidity absorber, that is also coupled to the desiccant network. This is advantageous, as the phase change from water vapor to water is always associated with heat release and each absorber provides heat, that can be either locally reused or, (if excess heat is released) can be fed to the thermal network. An example is given by an urban greenhouse, in which large quantities of humidity are generated by greenhouse plants during solar radiation and the absorption of humidity in a desiccant based absorber is only done for maintaining of a constant air humidity. In this case, the thermal load of the process can be forwarded to the thermal network via transition unit.

The invention also allows to include additional users, as the return of thermo-fluid with decreased temperature provided downstream of the first heat transfer unit can also be provided to a second heat transfer unit, where it is used for cooling purposes, e.g. for actively cooling an industrial device or an air conditioning unit, e.g. as an alternative for local cooling tower installations, thus also allowing to extend the potential segment of customers within the thermal network from heat consumers to consumers of cool.

The invention includes a configuration for an existing heat network, that allows the placement of transportable desiccant desorbers, for example installed within standard transport containers or within means of transportation, that are connected to the heat network at locations with sufficient remaining heat provided downstream of heat consumers (releasing reasonable amounts of unused heat) or downstream of low temperature heat sources or upstream of installations with cooling demand Those transportable desiccant desorbers can be moved within the thermal network area, according to thermal network demand and supply fluctuations of heat and cool. The integration of a thermal storage allows to provide heat to the thermal network as a heat source during a phase of thermal storage de-loading and to receive heat from the thermal network as a heat consumer during a period of thermal storage loading. As heat sources may provide heat at fluctuating temperature levels or only during certain periods, the heat can be either fed to the supply or to the return pipe of the thermal network. It can also be supplied to the thermal storage while heat from the thermal storage can be fed back to the thermal network during periods without heat supply from the heat source. A further option increasing the flexibility of a combined thermal and desiccant network is given by operating desiccant desorbers only during the periods of additional heat supply from the heat source, while providing a permanent supply within the desiccant network due to the ability of accumulating desiccant concentrate within an integrated desiccant storage, thus balancing fluctuating demand/supply situations within the thermal network and the desiccant network.

As desiccant desorbers and desiccant based absorbers are operated in direct contact between desiccant and air, desiccants can also be used for uptake of heat in the case of using liquid desiccants. This property can be used for heat transfer between a heat source provided as hot air (e.g. exhaust air from a server room or from a solar air collector) and the heat transfer units, connecting to the thermal network. This is of specific importance, as heat transfer from air to liquid is relatively inefficient if using tube bundle heat exchangers or alike, while a liquid desiccant is taking up heat in direct contact to air and only needs a specific surface structure provided.

A further possibility of a combined thermal and desiccant network is given by the option of transporting a liquid desiccant that provides at the same time a thermo-chemical potential and an evaporative cooling potential due to its concentration properties as well as a thermal potential due to its temperature. As an example, a cool concentrated desiccant can be used to provide cool and dry air to a building by directly contacting the supply air within a desiccant-based desorber or a heated and diluted desiccant can be used to provide moderately heated and humidified air to a building by directly contacting the supply air within a desiccant desorber.

Further features and advantages of the invention shall be described by means of a detailed description of embodiments with reference to the Figures.

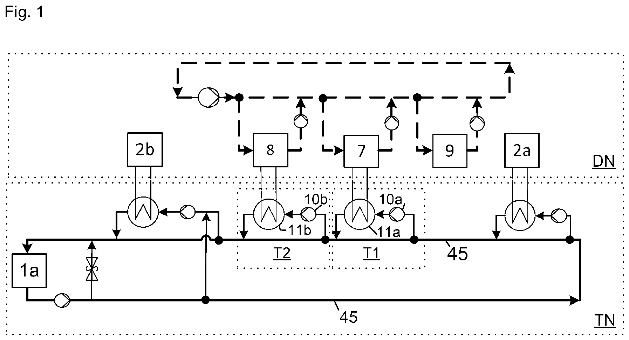

Fig. 1 illustrates as an example the interaction of a thermal network TN and a desiccant network DN with use of heat from a first heat source 1a , e.g. a district heating central station by a first heat consumer 2a, e.g. a building receiving thermo fluid from the circuit 45 downstream of the first heat source at 90 °C and a desiccant desorber 7 receiving thermo fluid from the circuit 45 at 40 °C downstream of the first heat consumer 2a through a first heat transfer unit T1, and a second heat source 1b receiving thermo fluid with lowered temperature through a second heat transfer unit T2 at a temperature of 20 °C.

In this specific example, heat at the second heat source 1b is generated by the absorption of water vapor e.g. under use of a stream of exhaust air from a commercial kitchen at 45 °C, thus especially harvesting the latent heat fraction of the air, which normally remains unused in heat recovery devices. The humidity is absorbed by the desiccant based absorber 8 within the desiccant network. In this way, heat source 1b and desiccant based absorber 8 are represented by only one device, receiving thermo chemical energy potential from the desiccant network, while providing thermal loads to the thermal network.

Finally a second heat consumer 2b, e.g. a building with a special low temperature heating system is receiving thermo fluid at 38 °C from the circuit 45 with three operational options, being
- thermo-fluid of 40 °C supplied from the circuit 45 downstream of the second heat source (1b) or
- thermo-fluid of 40 °C supplied from the circuit 45 downstream of the first heat consumer 2a with the desiccant desorber 7 and desiccant absorber 8 switched off, or
- thermo-fluid of 90 °C, supplied at least partially from the circuit 45 downstream from the first heat source 1a, e.g. for hot water generation only..

On the side of the desiccant network DN, concentrated desiccant produced in the desiccant desorber 7 is pumped to the desiccant based humidity absorber 8 under optional accumulation of desiccant concentrate in the desiccant storage 9 and delayed supply of desiccant concentrate from the desiccant storage 9 during periods in which the desiccant desorber 7 is switched off or at reduced operation.

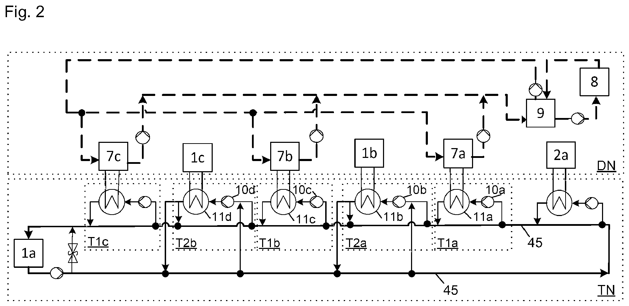

Fig. 2 shows a configuration of interacting thermal network TN and desiccant network DN as an example with several different decentralized desiccant desorbers 7a, 7b, 7c, in serial connection of the thermal network downstream of the first heat consumer 2a, of which 7b and 7c are receiving heat mainly from heat sources 1b, 1c located in serial connection between the desorbers 7a, 7b, 7c and together accumulate an amount of desiccant concentrate within one desiccant storage 9 in proximity to a larger installation for industrial drying, e.g. a paper factory with one central desiccant based humidity absorber 8.

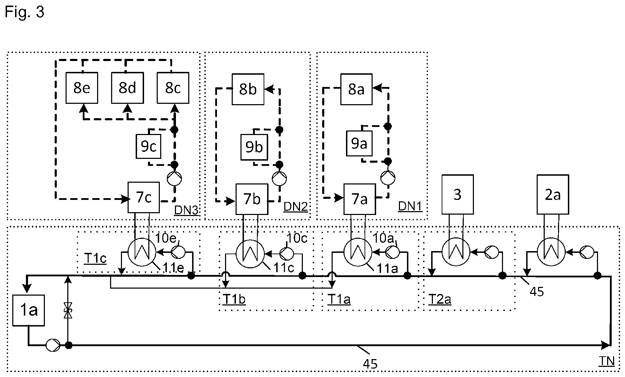

Fig. 3 shows an example for an integrated energy network for a high rise building, with a combined heat and power unit as a main heat source 1a. It is providing heat to a first heat consumer 2a in this example being e.g. a central, heat supply unit receiving heat at 80 °C and returning at 30 °C during winter (being unused during summer) and a thermal storage 3, realized as an aquifer thermal energy storage, acting in the thermal network as a second heat source 1b providing heat through the return pipe at temperatures between 35 °C and 40 °C during storage deloading in winter and subsequently acting as a second heat consumer 2b during the loading phase in summer with a return temperature between45 °C and 55 °C. Three individual desiccant networks are driven by the remaining heat downstream of the first heat consumer 2a and the thermal storage 3 with subsequent desiccant desorbers 7a, 7b, 7c and desiccant storages 9a, 9b, 9c, running individual desiccant based humidity absorbers 8a, 8b, 8c, 8d, 8e, as e.g. a central desiccant laundry dryer 8a, a roof greenhouse dehumidifier / latent heat recuperator 8b and individual room air dehumidifiers in each flat 8c, 8d, 8e for drying of supply air during summer as part of space cooling and drying of exhaust air for latent heat recovery as part of heat recovery during winter. The desiccant desorbers 7a, 7b, 7c are provided with thermo fluid of similar supply temperature, provided by three parallel pipes downstream of the heat storage 3, while feeding back thermo-fluid of unequal, reduced temperature into one return pipe downstream of the desorbers in the circuit 45.

## Claims

1. System for transport, storage and use of thermal and thermo-chemical energy potentials, comprising
• at least one thermal network (TN), comprising
∘ a first heat source (1a),
∘ a first heat consumer (2a),
a circuit (45) configured to carry a thermo-fluid, wherein the first heat source (1a) and the first heat consumer (2a) are connected to the circuit (45), wherein said circuit particularly comprises a forward pipe configured to carry the thermo-fluid from the first heat source to the first heat consumer, and a return pipe, configured to carry the thermo-fluid from the first heat consumer to the first heat source,
• a desiccant network (DN, DN1, DN2, DN3), designed to desiccate a desiccant, comprising the following components
∘ at least one desiccant desorber (7, 7a, 7b, 7c),
∘ at least one desiccant-based absorber and/or adsorber (8, 8a, 8b, 8c, 8d, 8e),
∘ at least one storage (9, 9a, 9b, 9c) for desiccant concentrate,
wherein said components of the desiccant network (DN, DN1, DN2, DN3) are interconnected to exchange among each other desiccant concentrate and diluted desiccant under use of pipelines or freight services,
• a first heat transfer unit (T1, T1a, T1b, T1c) connected to the circuit (45) downstream of the first heat consumer (2a) and upstream of the first heat source (1), wherein the first transfer unit (T1, T1a, T1b, T1c) comprises a first heat exchanger (11a, 11c, 11e) and a first pump (10a, 10c, 10e), wherein the first pump is designed to direct a fraction of the thermo-fluid from the circuit to the first heat exchanger (11a, 11c, 11e), wherein said first heat exchanger (11a, 11c, 11e) is configured to transfer heat from said fraction of the thermo-fluid directly or indirectly via heated air to the desiccant desorber (7, 7a, 7b, 7c) and wherein said first heat transfer unit (T1, T1a, T1b, T1c) is designed to return said fraction of thermo-fluid with decreased temperature downstream of the first heat exchanger (10a, 10c, 10e) to the circuit (45) of the thermal network (TN),
• a second heat transfer unit (T2, T2a, T2b) connected to the circuit (45), wherein said second transfer unit is arranged downstream of the first heat transfer unit, comprising a second heat exchanger (11b, 11d) and a second pump (10b, 10d), designed to direct a fraction of the thermo-fluid from circuit (45) wherein said fraction is particularly drawn from the circuit either upstream or downstream of the first heat consumer of the thermal network (TN) to the second heat exchanger (11b, 11d), wherein said second heat exchanger (11b, 11d) is designed for transferring heat from a second heat source (1b, 1c) to said fraction of thermo-fluid and wherein said second heat transfer unit (T2, T2a, T2b) is designed to return said fraction of thermo-fluid with increased temperature to the circuit (45) of the thermal network (TN), particularly into the forward pipe or the return pipe of the thermal network.

2. System according to claim 1, **characterized in that** a plurality of first heat transfer units (T1, T1a, T1b, T1c) is connected to the circuit (45) downstream of the first heat consumer (2a) and upstream of the first heat source (1a) and/or a plurality of second heat transfer units (T2, T2a, T2b) is connected to the circuit (45) downstream and/or upstream of the first heat consumer (2a) and upstream of the first heat source (1a), and wherein particularly the first heat transfer units (T1, T1a, T1b, T1c) and second heat transfer units (T2, T2a, T2b) are connected in an alternating sequence to the circuit (45).

3. System according to one of the preceding claims, **characterized in that** a plurality of the first heat transfer units (T1, T1a, T1b, T1c) is connected to the circuit (45) forming a parallel connection of said plurality of first heat transfer units (T1, T1a, T1b, T1c), particularly such that each first heat transfer unit of said plurality of first transition units (T1, T1a, T1b, T1c) of draws thermo-fluid having the same temperature.

4. System according to one of the preceding claims, **characterized in that** a plurality of the second heat transfer units (T2, T2a, T2b) is connected to the circuit (45) forming a parallel connection of said plurality of second heat transfer units (T2, T2a, T2b), particularly such that each second transition unit of said plurality of second transition units (T2, T2a, T2b) draws thermo-fluid having the same temperature.

5. System according to one of the preceding claims, **characterized in that** a plurality of the second heat transfer units (T2, T2a, T2b) is connected to the circuit (45) forming a serial connection of said plurality of second heat transfer units (T2, T2a, T2b), i.e. particularly each second transition unit (T2, T2a, T2b) draws the thermo-fluid of the preceding second transition unit, if there is a preceding second transition unit.

6. System according to one of the preceding claims, **characterized in that** a plurality of the first heat transfer units (T1, T1 a, T1b, T1c) is connected to the circuit (45) forming a serial connection of said plurality of first heat transfer units (T1, T1a, T1b, T1c), particularly such that each first transition unit draws the thermo-fluid of the preceding first transition unit, if there is a preceding first transition unit.

7. System according to one of the preceding claims, **characterized in that** at least one of the first or the second heat source (1a, 1b, 1c) is a desiccant-based absorber and/or adsorber (8, 8a, 8b, 8c, 8d, 8e), particularly gaining heat from an air dehumidification process

8. System according to one of the preceding claims, **characterized in that** thermo-fluid with temperature reduced by the desiccant desorber (7, 7a, 7b, 7c), provided to the circuit (45) of the thermal network (TN) is at least partially provided to a heat source (1b, 1c) with operational cooling demand like an air conditioning unit, a production machine or alike, and the thermo-fluid withdraws at least partially heat.

9. System as claimed in one of the preceding claims, **characterized in** the system comprises a plurality of thermal networks (TN) and/or that the system comprises a plurality of desiccant networks (DN, DN1, DN2, DN3).

10. System as claimed in one of the preceding claims, **characterized in that** the desiccant desorber (7, 7a, 7b, 7c) is designed to be transportable, wherein said desorber (7, 7a, 7b, 7c) particularly is arranged in a container, or that the desorber (7, 7a, 7b, 7c) is arranged on a mobile device, particularly on a power driven vehicle and that the desorber (7, 7a, 7b, 7c) is connected detachably to the desiccant network.

11. System according to one of the preceding claims, **characterized in that** a thermal storage (3) provides heat to the thermal network (TN) as a heat source (1, 1a, 1b, 1c) during a phase of thermal storage deloading, and receives heat from the thermal network (DN) as a heat consumer (2, 2a, 2b) during a period of thermal storage loading and
• heat from the thermal network during a phase of heat over-supply is stored optionally by at least one of the two processes
• thermal storage loading and
• combined desiccant regeneration in at least one of the desiccant desorbers
in combination with accumulation of concentrated desiccant within at least one desiccant storage (9),
and in a reverse period of increased heat demand, not completely covered by the implemented heat sources,
• heat from the thermal storage is provided to the thermal network (TN) and desiccant concentrate is provided to the desiccant network (DN) from the desiccant storage (9) and desiccant desorbers (7) are set off or run at lowered capacity.

12. System according to one of the preceding claims, **characterized in that** hot air from the first or second heat source (1a, 1b, 1c, 1d) is provided to the desiccant desorber (7, 7a, 7b, 7c, 7d) and heat provided beyond the capacity of the desiccant desorber is directed by the heated desiccant via the first heat exchanger (11, 11a, 11c, 11e) to the thermal network (TN).

13. System according to one of the preceding claims, **characterized in that** the desiccant is a fluid and wherein the thermo-fluid comprises the desiccant or wherein the thermo-fluid consists of the desiccant and wherein the thermo-fluid is particularly used as
• thermal potential,
• as thermo-chemical potential and
• as a potential of evaporative cooling.

14. System according to one of the preceding claims, **characterized in that** the second heat transfer unit (T2, T2a, T2b) draws at least a fraction of the fraction of the thermo-fluid directed to the second heat exchanger (11b, 11d) upstream of the first heat consumer (2a) and/or wherein the second heat transfer unit (T2, T2a, T2b) returns at least a fraction of the fraction of the thermo-fluid directed to the second heat exchanger (11b, 11d) upstream of the first heat consumer (2a) and the other fraction downstream of the first heat exchanger.

## Patentansprüche

1. System für Transport, Lagerung und Nutzung von thermischen- und thermo-chemischen Energiepotenzialen, dass folgendes umfasst:
• mindestens ein thermisches Netzwerk (TN), mit
° einer ersten Wärmequelle (1a),
° einem ersten Wärmeverbraucher (2a),
einem Leitungskreislauf (45) zur Übertragung eines Thermofluids, wobei die erste Wärmequelle (1a) und der erste Wärmeverbraucher (2a) an den Leitungskreislauf (45) angeschlossen sind, wobei der genannte Leitungskreislauf (45) eine Vorlaufleitung zur Überführung des Thermofluids von der ersten Wärmequelle zum ersten Wärmeverbraucher, sowie eine Rücklaufleitung zur Überführung des Thermofluids vom ersten Wärmeverbraucher zur ersten Wärmequelle aufweist.
• ein Trocknungsmittel Netzwerk (DN, DN1, DN2, DN3), dass für die Feuchtereduktion eines Trocknungsmittels ausgelegt ist und folgende Komponenten enthält
° mindestens einen Trocknungsmittel-Desorber (7, 7a, 7b, 7c),
° mindestens einen Trocknungsmittelbasierten Absorber und/oder Adsorber (8, 8a, 8b, 8c, 8d, 8e),
° mindesten einen Speicher (9, 9a, 9b, 9c) für Trocknungsmittelkonzentrat,
wobei die bezeichneten Komponenten des Trocknungsmittelnetzwerks (DN, DN1, DN2, DN3) miteinander verbindbar sind um untereinander Trocknungsmittelkonzentrat und verdünntes Trocknungsmittel unter Nutzung von Leitungen, Frachtdiensten oder ähnlichem auszutauschen,
• eine erste Wärmeübertragungseinheit (T1, T1a, T1b, T1c), die an den Leitungskreislauf (45) im Strömungsverlauf dem ersten Wärmeverbraucher (2a) nachgelagert und der ersten Wärmequelle (1a) vorgelagert ist und einen ersten Wärmetauscher (11a, 11c, 11e) und eine erste Pumpe (10a, 10c, 10e) aufweist wobei die erste Pumpe zur Überführung von Anteilen des Thermofluids von dem Leitungskreislauf zum ersten Wärmetauscher (11a, 11c, 11e) ausgeführt wird, wobei der erste Wärmetauscher (11a, 11c, 11e) ausgeführt wird um Wärme aus besagten Anteilen des Thermofluids direkt oder indirekt über erwärmte Luft zu dem Trocknungsmitteldesorber (7, 7a, 7b, 7c) zu übertragen und wobei die erste Wärmeübertragungseinheit (T1, T1a, T1b, T1c) so ausgeführt wird, dass die benannten Anteile des Thermofluids insbesondere mit verringerter Temperatur im Rücklauf des ersten Wärmetauschers (11a, 11b, 11c) an den Leitungskreislauf (45) des Wärmenetzes (TN) zurückgeführt wird,
• eine zweite an den Leitungskreislauf (45) verbindbare Wärmeübertragungseinheit (T2, T2a, T2b) wobei die besagte zweite Wärmeübertragungseinheit insbesondere im Strömungsverlauf der ersten Wärmeübertragungseinheit nachgelagert ist und einen zweiten Wärmetauscher (11b, 11d) und eine zweite Pumpe (10b, 10d) aufweist und so ausgeführt ist, dass eine Menge des Thermofluids aus dem Leitungskreislauf (45) wahlweise an einer dem ersten Wärmeverbraucher (2a) vor- oder nachgelagerten Stelle des Wärmenetzwerkes (TN) entnehmbar ist, und nach Führung über die zweite Wärmeübertragungseinheit (11b, 11d) zur Überführung von Wärme aus einer zweiten Wärmequelle (1b, 1c) als weiter erwärmte Menge von Thermofluid aus der zweiten Wärmeübertragungseinheit (T2, T2a, Tab) in den Leitungskreislauf (45) des Wärmenetzes (TN), wahlweise in dessen Vorlauf oder Rücklauf rückführbar ist.

2. System gemäß Anspruch 1 oder 2, **dadurch gekennzeichnet, dass** mehrere Wärmeübertragungseinheiten nach Art der ersten Übertragungseinheit (T1, T1a, T1b, T1c) im Leitungskreislauf (45) dem ersten Wärmeverbraucher (2a) nachgelagert und der ersten Wärmequelle (1a) vorgelagert und/oder mehrere Wärmeübertragungseinheiten nach Art der zweiten Übertragungseinheit (T2, T2a, T2b) im Leitungskreislauf (45) dem ersten Wärmekonsumenten (2a) vor- oder nachgelagert und der ersten Wärmequelle (1a) vorgelagert sind sowie insbesondere die Wärmeübertragungseinheiten nach Art der ersten Übertragungseinheit (T1, T1a, T1, T1c) und der zweiten Übertragungseinheit (T2, T2a, T2b) innerhalb des Leitungskreislaufs (45) jeweils in abwechselnder Reihenfolge anschließbar sind.

3. System gemäß einem der vorstehenden Ansprüche, **dadurch gekennzeichnet, dass** mehrere Wärmeübertragungseinheiten der ersten Übertragungseinheit (T1, T1a, T1b, T1c) an den Leitungskreislauf (45) anschließbar sind und diese Mehrzahl an Übertragungseinheiten (T1, T1a, T1b, T1c) parallel zueinander im Kreislauf angeordnet sind und jede dieser Wärmeübertragungseinheiten (T1, T1a, T1b, T1c) so mit Thermofluid von gleicher Temperatur befüllbar sind.

4. System gemäß einem der vorstehenden Ansprüche, **dadurch gekennzeichnet, dass** mehrere Wärmeübertragungseinheiten nach Art der zweiten Übertragungseinheit (T2, T2a, T2b) an den Leitungskreislauf (45) anschließbar sind und diese Mehrzahl an Übertragungseinheit (T2, T2a, T2b) parallel zueinander im Kreislauf angeordnet sind und jede dieser Wärmeübertragungseinheiten (T2, T2a, T2b) so mit Thermofluid von gleicher Temperatur befüllbar sind.

5. System gemäß einem der vorstehenden Ansprüche, **dadurch gekennzeichnet, dass** mehrere Wärmeübertragungseinheiten der zweiten Übertragungseinheit (T2, T2a, T2b) an den Leitungskreislauf (45) anschließbar sind und zusammen eine serielle Reihung dieser Wärmeübertragungseinheiten (T2, T2a, T2b) im Leitungskreislauf (45) bilden so dass jede der Wärmeübertragungseinheiten der zweiten Art (T2, T2a, T2b) mit Thermofluid aus dem Rücklauf der jeweils im Kreislauf vorgelagerten Wärmeübertragungseinheit der zweiten Art befüllbar ist, für den Fall dass es eine vorgelagerte Übertragungseinheit gibt.

6. System gemäß einem der vorstehenden Ansprüche, **dadurch gekennzeichnet, dass** mehrere Wärmeübertragungseinheiten der ersten Übertragungseinheit (T1, T1a, T1b, T1c) an den Leitungskreislauf (45) anschließbar sind und zusammen eine serielle Reihung dieser Wärmeübertragungseinheiten (T1, T1a, T1b, T1c) im Leitungskreislauf (45) bilden so dass jede der Wärmeübertragungseinheiten der ersten Art (T1, T1a, T1b, T1c) mit Thermofluid aus dem Rücklauf der jeweils im Leitungskreislauf vorgelagerten Wärmeübertragungseinheit der ersten Art befüllbar ist, für den Fall dass es eine vorgelagerte Übertragungseinheit gibt.

7. System gemäß einem der vorstehenden Ansprüche, **dadurch gekennzeichnet, dass** mindestens einer der ersten oder zweiten Wärmequelle (1a, 1b, 1c) ein Trocknungsmittel-basierter Absorber oder Adsorber (8, 8a, 8b, 8c, 8d, 8e) ist, welcher insbesondere Wärme aus einem Luftentfeuchtungsprozess entnimmt.

8. System gemäß einem der vorstehenden Ansprüche, **dadurch gekennzeichnet, dass** Thermofluid mit einer durch den Trocknungsmitteldesorber (7, 7a, 7b, 7c) reduzierten Temperatur an den Leitungskreislauf (45) des Wärmenetzes (TN) übergeben und dort zumindest teilweise an eine Wärmequelle (1b, 1c) weitergeleitet wird, die einen betriebsbedingten Kühlbedarf, etwa den einer Klimaanlage, einer Produktionsmaschine oder dergleichen aufweist und das Thermofluid so zumindest einen Teil dieser Wärme abführt.

9. System gemäß einem der vorstehenden Ansprüche, **dadurch gekennzeichnet, dass** das System eine Mehrzahl von Wärmenetzen (TN) und/oder dass das System eine Mehrzahl von Trocknungsmittelnetzwerken (DN, DN1, DN2, DN3) aufweist.

10. System gemäß einem der vorstehenden Ansprüche, **dadurch gekennzeichnet, dass** der Trocknungsmitteldesorber (7, 7a, 7b, 7c) als transportierbare Einheit ausgeführt ist, wobei der besagte Desorber (7, 7a, 7b, 7c) insbesondere in einem Transportbehältnis angeordnet ist oder dass der Desorber (7, 7a, 7b, 7c) auf einem bewegbaren Gerät angeordnet ist, insbesondere auf einem selbst-angetriebenen Fahrzeug und dass der Desorber (7, 7a, 7b, 7c) in einer abtrennbaren Weise an das Trocknungsmittelnetzwerk anschließbar ist.

11. System gemäß einem der vorstehenden Ansprüche, **dadurch gekennzeichnet, dass** ein Wärmespeicher (3) als Wärmequelle (1, 1a, 1b, 1c) in einer Phase der Speicherentleerung Wärme an das Wärmenetz (TN) bereitstellt und als Wärmeverbraucher (2, 2a, 2b) in einer Phase der Speicherbeladung Wärme aus dem Wärmenetz (TN) empfängt und dass
• Wärme aus dem Wärmenetz während einer Phase mit Wärmeüberangebot optional in mindestens einem der beiden Prozesse,
° dem Beladen des Wärmespeichers und
° der kombinierten Trocknungsmitte Regeneration in mindestens einem der Trocknungsmitteldesorber in Kombination mit Auffüllen von Trocknungsmittelkonzentrat in mindestens einem Trocknungsmittelspeicher (9) abgegeben wird,
und in einer umgekehrten Phase mit erhöhtem Wärmebedarf, welcher nicht vollständig aus den sonst angeschlossenen Wärmequellen gedeckt werden kann,
• Wärme aus dem Wärmespeicher an das Wärmenetz (TN) abgegeben werden und Trocknungsmittelkonzentrat an das Trocknungsmittelnetzwerk (DN) aus dem Trocknungsmittelspeicher (9) bereitgestellt wird und Trocknungsmittel Desorber (7) abgeschaltet oder auf verringerter Leistungsebene betrieben werden.

12. System gemäß einem der vorstehenden Ansprüche, **dadurch gekennzeichnet, dass** erwärmte Luft aus einer ersten Wärmequelle (1a, 1b, 1c, 1d) an den Trocknungsmitteldesorber (7, 7a, 7b, 7c, 7d) überführt wird, und über die für die Trocknungsmitteldesorption hinausgehende Wärmemengen von dem Trocknungsmittel aufgenommen und über den ersten Wärmetauscher (11, 11a, 11c, 11e) an das Wärmenetz übertragen werden.

13. System gemäß einem der vorstehenden Ansprüche, **dadurch gekennzeichnet, dass** das Trocknungsmittel eine flüssige Form aufweist und bei dem das Thermofluid das Trocknungsmittel enthält oder das Thermofluid in Form von Trocknungsmittel ausgeführt ist und bei dem das
• thermische Potenzial,
• das thermo-chemische Potenzial und
• das Potenzial der Verdunstungskühlung
des Thermofluids nutzbar gemacht wird.

14. System gemäß einem der vorstehenden Ansprüche, **dadurch gekennzeichnet, dass** die zweite Wärmeübertragungseinheit (T2, T2a, T2b) zumindest eine Teilmenge des Anteils von Wärmeträgerfluid führt, welches an den zweiten Wärmetauscher (11b, 11d) im Vorlauf des ersten Wärmeverbraucher (2a) weitergegeben wird und/oder bei dem die zweite Wärmeübertragungseinheit (T2, T2a, T2b) zumindest eine Teilmenge des Anteils von Wärmeträgerfluid führt, welches an den zweiten Wärmetauscher (11b, 11d) im Vorlauf des ersten Wärmeverbrauchers (2a) weitergegeben wird und eine weitere Teilmenge über den Rücklauf des ersten Wärmetauschers (11, 11a, 11c, 11e) weitergegeben wird.

## Revendications

1. Système destiné au transport, au stockage et à l'utilisation du potentiel énergétique thermique et thermochimique comprenant :
• Un réseau de chaleur au moins (TN), constitué :
- d'une première source de chaleur (1a),
- d'un premier consommateur de chaleur (2a),
un circuit (45) configuré pour transporter un fluide thermique, où la première source de chaleur (1a) et le premier consommateur de chaleur (2a) sont connectés, ledit circuit composé notamment d'un tuyau de départ configuré pour transporter le fluide thermique de la première source de chaleur au première consommation de chaleur, et d'un tuyau de retour, configuré pour transporter le fluide thermique du premier consommateur de chaleur à la première source de chaleur,
• un réseau dessicant (DN, DN1, DN2, DN3), conçu pour absorber l'humidité d'un dessicant, comprenant les composants suivants
- au moins un régénérateur de dessicant (7, 7a, 7b, 7c),
- au moins un déshumidificateur par absorption ou adsorption (8, 8a, 8b, 8c, 8d,8e),
- au moins un stockage (9, 9a, 9b, 9c) de solution dessicante concentré,
dans lequel lesdits composants du réseau dessicant (DN, DN1, DN2, DN3) sont reliés entre eux pour échanger les uns avec les autres le dessicant concentré et dilué par l'intermédiaire de pipelines, de service de fret ou similaire,
• une première unité de transfert de chaleur (T1, T1a, T1b, t1c) connecté au circuit (45) en aval du premier consommateur de chaleur (2a) et en amont de la première source de chaleur (1), dans laquelle la première unité de transfert (T1, T1a, T1b, t1c) se compose d'un premier échangeur de chaleur (11a, 11c, 11e) et d'une première pompe (10a, 10c, 10e), où la première pompe est conçue pour acheminer une fraction du fluide thermique du circuit vers le premier échangeur de chaleur (11a, 11c, 11e), où ledit premier échangeur de chaleur (11a, 11c, 11e) est configuré pour transférer la chaleur de ladite fraction du fluide thermique directement ou indirectement par l'intermédiaire d'air chaud jusqu'au régénérateur de dessicant (7, 7a, 7b,7c) et ou, la première unité de transfert de chaleur (T1, T1a, T1b, t1c) est conçue pour retourner ladite fraction de fluide thermique a une température inférieure en aval du premier échangeur de chaleur (10a, 10c, 10e) au circuit (45) du réseau thermique (TN),
• une deuxième unité de transfert de chaleur (T2, T2a, T2b) connectée au circuit (45), laquelle organisé en aval de la première unité de transfert, est composé d'un deuxième échangeur de chaleur (11b, 11d) et d'une deuxième pompe (10b, 10d), qui a pour objet de transporter une fraction du fluide thermique du circuit (45), ou ladite fraction est prélever soit en amont soit en aval du premier consommateur du réseau de chaleur (TN), au deuxième échangeur de chaleur (11b, 11d), où ledit deuxième échangeur de chaleur (11b, 11d) est conçu pour le transfert de chaleur à partir d'une deuxième source de chaleur (1b, 1c) à ladite fraction de fluide thermique et où ladite deuxième unité de transfert de chaleur (T2, T2a, T2b) est conçue pour retourner la fraction de fluide thermique à une température plus élevée au circuit (45) du réseau thermique (TN), par l'intermédiaire du tuyau de départ ou du tuyau de retour du réseau thermique (TN).

2. Système selon la revendication 1 ou 2, **caractérisée en ce qu'**une pluralité de premières unités de transfert de chaleur (T1, T1a, T1b, t1c) est connectée au circuit (45) en aval du premier consommateur de chaleur (2a) et en amont de la première source de chaleur (1a) et/ou qu'une pluralité de deuxièmes unités de transfert de chaleur (T2, T2a, T2b) est connectée au circuit (45) en aval et/ou en amont du premier consommateur de chaleur (2a) et en amont de la première source de chaleur (1a), et en particulier où la première unité de transfert de chaleur (T1, T1a, T1b, t1c) et la deuxième unités de transfert de chaleur (T2, T2a, T2b) sont connectées en alternance au le circuit (45).

3. Système selon l'une des revendications précédentes, **caractérisé en ce qu'**une pluralité de premières unités de transfert de chaleur (T1, T1a, T1b, t1c) est connectée au circuit (45) formant une connexion en parallèle de ladite pluralité des premières unités de transfert de chaleur d'abord (T1, T1a, T1b, t1c), en particulier de sorte que chaque première unité de transfert de chaleur (T1, T1a, T1b, t1c) soit alimentée avec un fluide thermique de même température.

4. Système selon l'une des revendications précédentes, **caractérisé en ce qu'**une pluralité de deuxièmes d'unités de transfert de chaleur (T2, T2a, T2b) est connectée au circuit (45) formant une connexion en parallèle de ladite pluralité de deuxièmes unités de transfert de chaleur (T2, T2a, T2b), en particulier, de sorte que chaque deuxième unité de transfert de ladite pluralité de deuxièmes unités de transfère (T2, T2a, T2b) soit alimenter avec un fluide thermique de la même température.

5. Système selon l'une des revendications précédentes, **caractérisé en ce qu'**une pluralité de deuxièmes unités de transfert de chaleur (T2, T2a, T2b) est connectée au circuit (45) formant une connexion en série de ladite pluralité de deuxièmes unités de transfert de chaleur (T2, T2a, T2b), en particulier de sorte que chaque deuxième unité de transfert (T2, T2a, T2b) s'alimente du fluide thermique de la deuxième unité de transfert précédente, s'il existe une précédente deuxième unité de transfère.

6. Système selon l'une des revendications précédentes, **caractérisé en ce qu'**une pluralité de premières unités de transfert de chaleur (T1, T1a, T1b, t1c) est connectée au circuit (45) formant une connexion en série de ladite pluralité de premières unités de transfert de chaleur d'abord (T1, T1a, T1b, t1c), particulièrement tels que chaque première unité de transfère s'alimente du fluide thermique de la première unité de transfert précédente, s'il existe une précédente première unité de transition.

7. Système selon l'une des revendications précédentes, **caractérisé en ce qu'**au moins une des première ou deuxième source de chaleur (1a, 1b, 1c) est un déshumidificateur par absorption ou adsorption (8, 8a, 8b, 8c, 8d,8e), qui en particulier accumule la chaleur d'un procédé de déshumidification.

8. Système selon l'une des revendications précédentes, **caractérisé en ce que** le fluide thermique dont la température est réduite par le régénérateur de dessiccant (7, 7a, 7b, 7c), est transféré au circuit (45) du réseau de chaleur (TN) et est au moins partiellement redirigé vers une source de chaleur (1b, 1c) dont la demande opérationnelle de refroidissement est comparable à une unité de conditionnement de l'air, une machine de production ou similaire, et dont le fluide thermique retire au moins partiellement la chaleur.

9. Système selon l'une des revendications précédentes, **caractérisé en ce que** le système comprend une pluralité de réseaux thermiques (TN) et/ou que le système se compose d'une pluralité de réseaux de dessicant (DN, DN1, DN2, DN3).

10. Système selon l'une des revendications précédentes, **caractérisé en ce que** le régénérateur de dessicant (7, 7a, 7b, 7c) est conçu pour être transportable, lequel régénérateur (7, 7a, 7b, 7c) est en particulier est disposé dans un conteneur, ou que le régénérateur (7, 7a, 7b, 7c) est disposé sur un appareil mobile, en particulier sur un véhicule à moteur et que le régénérateur (7, 7a, 7b, 7c) est connecté au réseau de dessicant de manière à ce qu'il puisse être attacher et détacher.

11. Système selon l'une des revendications précédentes, **caractérisé en ce qu'**un stockage de chaleur (3) fournit la chaleur au réseau de chaleur (TN) en tant que source de chaleur (1, 1a, 1b, 1c) pendant une phase de déstockage de la chaleur, et reçoit la chaleur du réseau de dessiccant (DN) en tant que consommateur de chaleur (2, 2a, 2b) pendant une période de stockage de chaleur ; et que :
• l'excèdent de chaleur du réseau de chaleur pendant une phase où l'offre de chaleur est excédentaire est stockée éventuellement par au moins un des procédés suivants :
• chargement du stockage de chaleur (3)
• régénération du dessicant dans au moins un régénérateur de dessicant combinée à l'acheminement de ce dessicant concentré dans au moins un stockage de dessicant (9),
et inversement dans une période de demande de chaleur accrue , ou la demande ne peut pas être entièrement couvertes par la mise en oeuvre des sources de chaleur,
• le déficit de chaleur, est fourni par le stockage de chaleur (3) au réseau de chaleur (TN) et le dessiccant concentré est fourni par le stockage de dessiccant(9) au réseau de dessiccant (DN) et le régénérateur de dessicant (7) est désactivée ou fonctionne à capacité réduite.

12. Système selon l'une des revendications précédentes, **caractérisé en ce que** la chaleur de l'air de la première ou deuxième source de chaleur (1a, 1b, 1c, 1d) est fournie au régénérateur de dessicant (7, 7a, 7b, 7c, 7d) et que de la chaleur fournie au-delà de la capacité du régénérateur de dessicant redirigée par l'intermédiaire du dessicant chauffé et du premier échangeur de chaleur (11, 11a, 11a, 11e) au réseau de chaleur (TN).

13. Système selon l'une des revendications précédentes, **caractérisé en ce que** le dessicant est un fluide dans lequel le fluide thermique inclus le dessicant ou dans lequel le fluide thermique se compose du dessicant et où le fluide thermique est utilisé pour :
• son potentiel thermique
• son potentiel thermochimique et
• son potentiel d'évapotranspiration

14. Système selon l'une des revendications précédentes, **caractérisé en ce que** la deuxième unité de transfert de chaleur (T2, T2a, T2b) retire au moins une fraction de la fraction du fluide thermique acheminé au deuxième échangeur de chaleur (11b, 11d) en amont du premier consommateur de chaleur (2a) et/ou **en ce que** la deuxième unité de transfert de chaleur (T2, T2a, T2b) retourne au moins une fraction de la fraction du fluide thermique acheminé au deuxième échangeur de chaleur (11b, 11d) en amont du premièr consommateur de chaleur (2a) et l'autre fraction en aval du premier échangeur de chaleur.
